# EUROPÄISCHE PATENTSCHRIFT

(11) **EP 2 528 426 B1**
(45) Veröffentlichungstag und Bekanntmachung des Hinweises auf die Patenterteilung: **20.01.2016**
(21) Anmeldenummer: 10702051.3
(22) Anmeldetag: 26.01.2010
(51) Int. Cl.: A01G 3/06

(54) **GRASSCHERE**
GRASS SHEARS
CISEAUX À GAZON

(43) Veröffentlichungstag der Anmeldung: 05.12.2012
(73) Patentinhaber: HUSQVARNA AB, 561 82 Huskvarna (SE)
(72) Erfinder: KOHL, Peter, 89257 Illertissen (DE); LOCHER, Ottmar, 89079 Ulm (DE)
(74) Vertreter: Finkele, Rolf
(86) Internationale Anmeldenummer: PCT/EP2010/000421
(87) Internationale Veröffentlichungsnummer: WO 2011/091808

(56) Entgegenhaltungen:
- EP-A1- 1 886 551
- WO-A1-2006/050981
- DE-U1- 29 612 250

## Beschreibung

Die Erfindung betrifft eine Grasschere.

Grasscheren sind für effektives und leichtes Arbeiten häufig motorisch angetrieben und enthalten zwei entlang einer Schneidebene relativ zueinander oszillierend bewegbare Messer, welche jeweils eine Fingerstruktur mit mehreren Schneidfingern bilden. Die Relativbewegung der beiden Messer erfolgt quer zur Längsrichtung der Finger, so dass sich bei der oszillierenden Relativbewegung der beiden Messer Lücken zwischen den Schneidfingern periodisch öffnen und schließen. Die Lücken sind dabei in einer eine Arbeitsrichtung bestimmenden, von dem Gehäuse der Grasschere weg weisenden Richtung offen, so dass durch Vorschub der Grasschere in Arbeitsrichtung das zu schneidende Gras in die geöffneten Lücken eingeführt werden kann und beim Schließen der Lücken abgeschnitten wird. Typischerweise umfasst die Messeranordnung ein bezüglich des Gerätegehäuses feststehendes Untermesser und ein relativ dazu bewegbares Obermesser.

Derartige Grasscheren, wie zum Beispiel EP 1 886 551 A1, sind typischerweise beim Arbeiten mit einer Benutzerhand an einem Gehäuse-Handgriff führbar, während die zweite Benutzerhand frei ist. Es zeigt sich, dass die Gefahr, dass der Benutzer mit Fingern der freien Hand versehentlich in die laufende Messeranordnung greift, nicht vernachlässigbar ist und dabei auch schwere Verletzungen an den Fingern auftreten können.

Der Erfindung liegt daher die Aufgabe zugrunde, die Gefahr insbesondere schwerer Fingerverletzungen bei einer derartigen Grasschere zu verringern. Die Erfindung ist im unabhängigen Anspruch beschrieben. Die abhängigen Ansprüche enthalten vorteilhafte Ausgestaltungen der Erfindung.

Die Anordnung von im Betrieb mit dem Obermesser bewegten oberen Schutzstrukturen auf der der Schneidebene abgewandten Seite, also in Betriebsstellung oberhalb der Schneidfinger des Obermessers führt vorteilhafterweise in den meisten Fällen zur frühzeitigen Abweisung eines Fingers, welcher von oben, insbesondere schräg von vorne relativ zu der Messeranordnung bewegt wird. Durch die oszillierende Schneidbewegung des Obermessers mit einer Frequenz in der Größenordnung von 1000 Zyklen pro Minute wird ein in Richtung der Messeranordnung bewegter Finger eines Benutzers bei geringer Relativbewegung zwischen Finger und Messeranordnung von den über dem Obermesser liegenden Schutzstrukturen erfasst, so dass der Benutzer Finger und/oder Grasschere, gewöhnlich reflexartig, wieder voneinander entfernt. Dabei können vorteilhafterweise die Öffnungsweiten der Lücken zwischen dem Schneidfinger im wesentlichen unverändert bleiben, so dass keine Beeinträchtigung der Schneidleistung der Grasschere zu erwarten ist.

Die oberen Schutzstrukturen sind vorteilhafterweise zumindest in einem Frontbereich der Schneidfinger des Obermessers vorgesehen. Vorzugsweise erstrecken sich die Schutzstrukturen über die gesamte Länge der Schneidkanten der Schneidfinger, wobei vorteilhafterweise die Höhe der Schutzstrukturen über den Schneidfingern in einem Frontbereich bei den Spitzen der Schneidfinger größer sein kann als in einem entgegen der Arbeitsrichtung weiter gegen die Spitzen der Schneidfinger zurück gesetzten Bereich. Hierdurch wird der Erkenntnis Rechnung getragen, dass ein Finger typischerweise im Frontbereich der Messeranordnung, wo auch die Weite der Lücken zwischen den Schneidfingern am größten ist, erfasst wird. Die oberen Schutzstrukturen über den Schneidfingern des Obermessers haben den zusätzlichen Effekt, dass die Schutzstrukturen, insbesondere bei Einfärbung mit einer zu Grasgrün kontrastierenden Farbe, leichter erkennbar sind als das tiefer liegende und in der Regel nicht gefärbte Obermesser.

Um in Fällen, in welchen insbesondere durch schnelle Relativbewegung eines Benutzerfingers gegenüber der Messeranordnung, z. B. bei Abrutschen der Grasschere oder der freien Benutzerhand, ein Finger trotz der oberen Schutzstrukturen in eine Lücke zwischen sich schließenden Messern gelangt, Verletzungen gering zu halten, sind gemäß einer bevorzugten Weiterbildung auch an der der Schneidebene abgewandten Seite der Schneidfinger des Untermessers untere Schutzstrukturen angeordnet.

Die Anordnung von Schutzstrukturen an beiden Messern auf der der gemeinsamen Schneidebene abgewandten Seite der Messer macht sich auf vorteilhafte Weise zunutze, dass Gras als zu schneidendes Schnittgut dünn und flexibel ist, wogegen ein Finger eines Benutzers vergleichsweise dick und starr ist, so dass bei versehentlich in eine Lücke der laufenden Messeranordnung eingebrachtem Finger die an diesem zur Anlage kommenden Schutzstrukturen einen hohen Widerstand gegen eine Fortsetzung der Schließbewegung der Messer bewirken und allenfalls eine leichte Verletzung, aber keinen tiefen Einschnitt der Messer in den Finger zulassen, wogegen beim Schneiden von Gras ein Grashalm bereits bei geringer Messerbewegung durchgeschnitten ist oder ein gegebenenfalls dickerer Stengel so flexibel ist, dass bei einer Schließbewegung der Messer im regulären Betrieb die Schutzstrukturen keinen nennenswerten zusätzlichen Widerstand bewirken.

Das Maß, um welches die Schutzstrukturen senkrecht zur Schneidebene über die Messer abstehen, beträgt vorteilhafterweise ein Mehrfaches der Dicke der die Fingerstrukturen der Messer bildenden Messerplatten.

Die Schutzstrukturen sind mit dem jeweils zugeordneten Messer mitbewegt bzw. mit diesem relativ zum Gerätegehäuse feststehend. Insbesondere ist in an sich gebräuchlicher Weise ein Untermesser und mit dem Untermesser als einem ersten Messer auch die diesem zugeordneten, nachfolgend als untere Schutzstrukturen bezeichnete Schutzstrukturen bezüglich des Gerätegehäuses feststehend. Diese unteren Schutzstrukturen bilden vorteilhafterweise eine bauliche Einheit mit Bodengleitkufen unter dem Untermesser, mit welchem die Grasschere beim Arbeiten auf dem Boden aufgesetzt und gleitend verschoben werden kann und welche einen minimalen Abstand der Messeranordnung vom Boden bestimmen. Die dem Obermesser zugeordneten oberen Schutzstrukturen sind im Betrieb der Grasschere gemeinsam mit dem Obermesser relativ zum Gerätegehäuse oszillierend bewegt.

Die Fingerstrukturen der Schneidfinger der beiden Messer können in Arbeitsrichtung relativ zum Gehäuse unterschiedlich lang sein. Bekannt ist es, dass die Schneidfinger des Untermessers in Arbeitsrichtung über die Schneidfinger des Obermessers hinaus ragen. Die Schutzstrukturen reichen vorteilhafterweise wenigstens bis zur Spitze der Schneidfinger der kürzeren der beiden gegebenenfalls unterschiedlich langen Fingerstrukturen der Messer, vorzugsweise um ein geringes Maß über die Spitzen der kürzeren Fingerstruktur hinaus. Vorteilhafterweise reichen zumindest bei den Schneidfingern der kürzeren der gegebenenfalls unterschiedlich langen Fingerstrukturen der Messer die Schneidkanten in Arbeitsrichtung bis zu den Spitzen der Schneidfinger. Die Schutzstrukturen erstrecken sich entlang der Schneidkanten vom in Arbeitsrichtung vorderen Ende einer Schneidkante und zugeordneten Schutzstrukturen um wenigstens 3 mm entgegen der Arbeitsrichtung, vorzugsweise im wesentlichen über die gesamte Länge der jeweiligen Schneidkanten.

Typischerweise ist ein relativ zum Gehäuse oszillierend bewegtes Messer um eine gegen die Fingerstruktur entgegen der Arbeitsrichtung zurückgesetzt angeordnete vertikale Schwenkachse bewegt, so dass die Fingerstruktur bei laufendem Messer eine oszillierende Kreisbogenbewegung um die Schwenkachse vollführt. Dies ist angenähert als Bewegungsrichtung quer zur Arbeitsrichtung verstanden. Die Schneidfinger einer Fingerstruktur sind dabei in ihrer jeweiligen Längsrichtung nicht exakt parallel zueinander ausgerichtet, aber für die nachfolgende Beschreibung soweit nicht explizit oder offensichtlich anders angegeben als zu parallel ausgerichteten Schneidfingern im Sinne der Erfindung gleichwirkend betrachtet. Typischerweise sind die als Messerplatten ausgebildeten Messer mit ihren Messerebenen nicht exakt parallel zueinander ausgerichtet, sondern absichtlich gegeneinander geneigt. Für die nachfolgende Beschreibung seien die Messerplatten dennoch als parallel zueinander und in einer gemeinsamen Schneidebene aneinander anliegend angesehen.

In Projektion senkrecht zu der den beiden Messern gemeinsamen Schneidebene liegen die Schutzstrukturen vorteilhafterweise in Bewegungsrichtung der Relativbewegung der Messer nicht oder allenfalls gering hinter den jeweiligen Schneidkanten, so dass die Bremswirkung der am Finger seitlich anliegenden Flanken der Schutzstrukturen frühzeitig bei nur geringer Einschnitttiefe der Schneidkanten in den Finger eintritt. Die Schutzstrukturen können auch in der Bewegungsrichtung über die Schneidkanten in die Lücken zwischen benachbarten Schneidfingern hinausragen. Vorzugsweise ragen die Schutzstrukturen an ihren senkrecht zur Schneidebene den Messern zugewandten Enden nicht über die Schneidkanten in Bewegungsrichtung hinaus. Die Schneidkanten können schräg gegen die Schneidebene geneigt angeschliffen sein.

Die Schutzstrukturen weisen von den der Schneidebene abgewandten Seiten der Messer weg führend vorteilhafterweise Seitenflanken auf, welche höchstens 45°, vorzugsweise höchstens 30° gegen die Flächennormale der Schneidebene geneigt verlaufen.

Die Schutzstrukturen zu mehreren Schneidfingern einer Messeranordnung sind vorteilhafterweise in einem gemeinsamen Schutzkörper zusammengefasst die Schutzstrukturen bestehen vorzugsweise aus Kunststoff. Vorteilhafterweise sind wenigstens die einen Messer zugeordneten Schutzstrukturen lösbar mit dem Messer verbunden.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Messeranordnung mit Obermesser und Untermesser,
- Fig. 2: die Anordnung nach Fig. 1 und zwei Schutzstrukturen,
- Fig. 3: die Anordnung nach Fig. 2 mit einer Schutzstruktur montiert,
- Fig. 4: eine Grasschere mit Messeranordnung und montierten Schutzstrukturen,
- Fig. 5: einen Vergleich von Verletzungssituationen,
- Fig. 6: eine Ansicht der Messer mit Schutzstrukturen entgegen der Arbeitsrichtung,
- Fig. 7: eine Variante einer Obermesser-Schutzstruktur,
- Fig. 8: eine Seitenansicht der Messer mit Schutzstruktur.

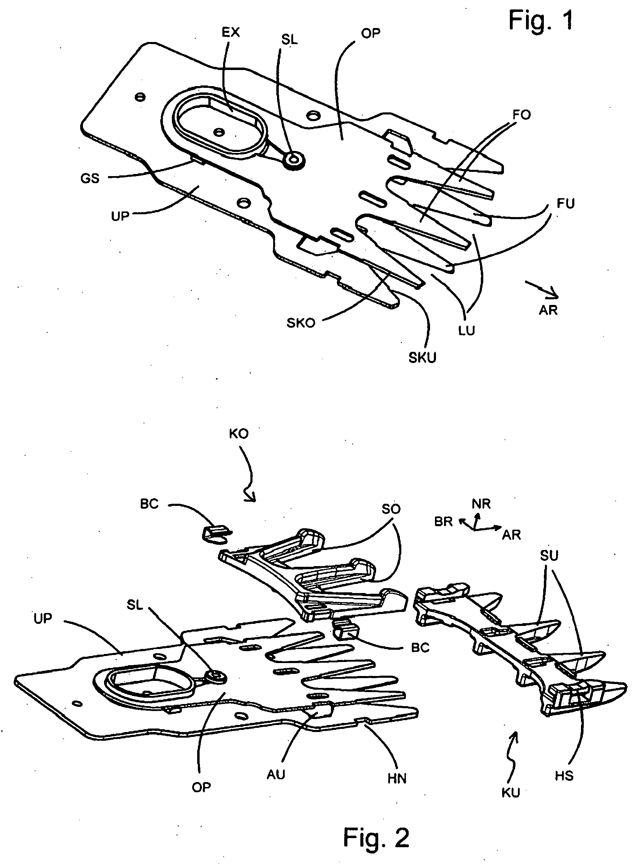

Fig. 1 zeigt eine für motorbetriebene Grasscheren typische Messeranordnung, in welcher eine Obermesserplatte OP und eine Untermesserplatte UP in einem Schwenkgelenk SL um eine senkrecht zu den Plattenebenen verlaufende Schwenkachse relativ zueinander verschwenkbar sind. Dabei ist typischerweise die Untermesserplatte UP bezüglich eines Gerätegehäuses feststehend und das Obermesser wird um das Schwenkgelenk oszillierend hin und her geschwenkt. Der Antrieb erfolgt typischerweise über einen motorseitigen exzentrischen Zapfen, welcher in eine ovale Exzenteraufnahme EX an dem den Schneidfingern bezüglich des Schwenkgelenks SL entgegen gesetzten Ende der Obermesserplatte OP eingreift. Die Obermesserplatte ist im Bereich der Exzenteraufnahme durch Gleitstücke GS gegen die Untermesserplatte abgestützt und gegen diese verspannt, so dass Obermesserplatte und Untermesserplatte nicht exakt parallel verlaufen. Im folgenden sei aber vereinfacht von einem parallelen Verlauf von Obermesserplatte und Untermesserplatte ausgegangen.

Die Untermesserplatte hat mehrere, im skizzierten Beispiel vier untere Schneidfinger FU, welche in Arbeitsrichtung AR von dem Gehäuse weg ragen. Die Schneidfinger sind nicht parallel ausgerichtet, sondern leicht gegeneinander von einer Mittelebene weg gespreizt. Die Fingerstruktur der unteren Finger FU ist typischerweise spiegelsymmetrisch bezüglich einer Mittelebene. Zwischen benachbarten Fingern bilden sich in Arbeitsrichtung AR offene Lücken.

Die Anzahl der oberen Finger FO der Obermesseranordnung ist typischerweise um 1 geringer als die Anzahl der unteren Schneidfinger FU. Die oberen Schneidfinger FO des Obermessers werden im Betrieb des Grasmessers oszillierend um das Schwenkgelenk SL hin und her geschwenkt. Die Bewegung der oberen Schneidfinger FO des Obermessers erfolgt dabei quer zur Arbeitsrichtung AR, wofür vereinfacht eine mittlere Bewegungsrichtung BR angenommen sei, welche senkrecht zur Arbeitsrichtung und zur Flächennormalenrichtung NR der als parallel angenommenen Messerplatte bzw. deren gemeinsamer Schneidebene verläuft. In einer ersten Extremposition der Schwenkbewegung überdecken sich die oberen Schneidfinger FO des Obermessers mit den ersten drei unteren Schneidfingern des Untermessers von links her gezählt und der ganz rechte Schneidfinger des Untermessers ist nicht mit einem oberen Schneidfinger des Obermessers überdeckt. In der anderen Extremposition der Schwenkbewegung überdecken die drei oberen Schneidfinger des Obermessers die ersten drei unteren Schneidfinger von rechts und der ganz linke untere Schneidfinger ist nicht mit einem oberen Schneidfinger überdeckt. In den beiden Extrempositionen sind jeweils die Lücken LU zwischen den unteren Schneidfingern, welche dabei mit Lücken der oberen Schneidfinger zusammenfallen, maximal weit geöffnet. Die Messerstellung in Fig. 1 zeigt eine Mittenstellung, in welcher die Lücken LU bereits teilweise geschlossen sind. Die Schneidpunkte, an welchen sich Schneidkanten SKO der oberen Schneidfinger und Schneidkanten SKU der unteren Schneidfinger in Projektion senkrecht zu den Messerplatten kreuzen, wandern während der Schneidbewegung entlang der Schneidkanten.

Fig. 2 zeigt zusätzlich zu der in Fig. 1 dargestellten Messeranordnung einen unteren Schutzkörper KU, einen oberen Schutzkörper KO sowie Befestigungselemente BC. Der untere Schutzkörper KU weist untere Schutzstrukturen SU in Form von mehreren von einem quer zur Arbeitsrichtung verlaufenden Grundteil des Schutzkörpers in Arbeitsrichtung AR vorstehenden Schutzfingern auf. An den quer zur Arbeitsrichtung AR seitlich außen liegenden Abschnitten des Grundkörpers des unteren Schutzkörpers KO sind Haltestrukturen HS ausgebildet, welche mit Seitenkanten der Untermesserplatte UP und einer darin vorgesehenen Aussparung HN korrespondieren, um den unteren Schutzkörper KO lösbar auf der unteren Messerplatte UP befestigen zu können.

Der obere Schutzkörper KO weist in entsprechender Weise einen quer zur Arbeitsrichtung verlaufenden Grundkörper auf, von welchem obere Schutzstrukturen SO in Form von mehreren im wesentlichen in Arbeitsrichtung weisenden Schutzfingern abstehen.

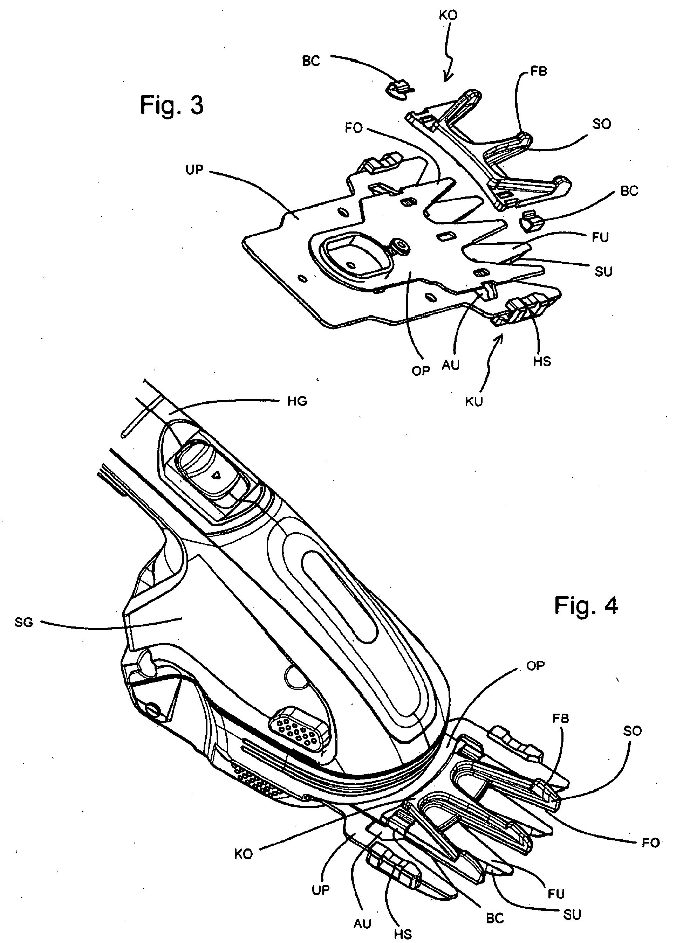

In Fig. 3 ist die Messeranordnung in einer Situation gezeigt, in welcher der untere Schutzkörper KO auf die untere Messerplatte aufgesteckt ist und die Haltestrukturen HS durch Umgreifen der beiden in Bewegungsrichtung BR entgegen gesetzten Seitenkanten der Untermesserplatte UP eine Festlegung des Schutzkörpers KU quer zur Arbeitsrichtung und durch Eingriff in die Aussparung HN eine verrastende Festlegung in Arbeitsrichtung bewirken. Die Schutzfinger der unteren Schutzstrukturen SU liegen unterhalb der Schneidfinger FU der Untermesserplatte. Die Spitzen der Schutzfinger der Schutzstrukturen SU sind um ein geringes Maß gegen die Spitzen der unteren Schneidfinger FU entgegen der Arbeitsrichtung zurückgesetzt.

Die Schutzfinger der unteren Schutzstrukturen SU setzen sich mit ihren den Schneidfingern der Untermesserplatte nach unten abgewandten gekrümmten Kanten als Bodengleitkufen fort, welche eine Abstützung des Gerätes auf dem Boden erlauben und einen Mindestabstand der Messeranordnung vom Boden bewirken. Die Bodengleitkufen besitzen vorteilhafterweise der Untermesserplatte UP abgewandt eine in Arbeitsrichtung durchgehend geringe Breite der unteren Kufenflächen. An ihren oberen, der Unterseite der Untermesserplatte UP zuweisenden Enden der Schutzfinger der Schutzstrukturen SU ist die Breite der Schutzstrukturen vorteilhafterweise zumindest in einem von deren vorderer Spitze nach hinten verlaufenden ersten Abschnitt dem Verlauf der Schneidkanten der unteren Schneidfinger FU angepaßt, indem die Seitenkanten der Schutzfinger ungefähr dem Verlauf der Schneidkanten folgen, wie noch näher beschrieben wird. Die unteren Schutzfinger SU bewirken vorteilhafterweise über zumindest die Hälfte der Länge der Schneidfinger FU keine Einschränkung der lichten Weite der Lücken zwischen den unteren Schneidfingern FU.

In Fig. 4 ist eine motorbetriebene Handgrasschere mit einer Messeranordnung nach Fig. 3 skizziert, wobei nunmehr auch der obere Schutzkörper KO auf der Obermesserplatte OP befestigt ist. Die Grasschere enthalte in einem Gehäuse SG einen Antriebsmotor. An den den Motor umgebenden Gehäuseteil schließt sich ein Handgriff HG zur einhändigen Bedienung der Grasschere an.

Der obere Schutzkörper KO ist mittels der Befestigungselemente BC auf der Obermesserplatte OP verklammert, wobei die Befestigungselemente BC die Obermesserplatte untergreifen und in Aussparungen AU der Untermesserplatte einliegen, welche für eine ungehinderte Bewegung der Befestigungselemente BE bei der oszillierenden Bewegung des Obermessers relativ zum Untermesser bemessen sind.

Die Schutzfinger der oberen Schutzstrukturen SO, welche von dem Grundkörper KO des oberen Schutzkörpers in Arbeitsrichtung nach vorne ragen, erstrecken sich vorteilhafterweise in Arbeitsrichtung um ein geringes Maß über die Spitzen TO der oberen Schneidfinger FO des Obermessers hinaus. Die Spitzen TO der oberen Schneidfinger sind in an sich bekannter Weise gegen die Spitzen TU der unteren Schneidfinger entgegen der Arbeitsrichtung AR zurückgesetzt. An ihren unteren, senkrecht zur Ebene der Obermesserplatte den oberen Schneidfingern FO zugewandten Seiten folgen die Finger der oberen Schutzstrukturen SO im wesentlichen den Schneidkanten der oberen Schneidfinger FO.

Durch die Schutzfinger der oberen Schutzstrukturen SO wird ein sich der Messeranordnung von oben nähernder Finger durch diese Schutzstrukturen, welche durch ihre stumpf ausgeführten Enden keine Verletzungen verursachen, im Regelfall bereits frühzeitig beaufschlagt, so dass der Benutzer Finger und Grasschere wieder voneinander entfernen kann. Verletzungen durch die Messeranordnung können daher in solchen typischen Situationen bereits frühzeitig vermieden werden. Die Schutzstrukturen SO sind vorteilhafterweise im Bereich ihrer Spitzen erhöht, wodurch in diesen aufgrund der größten Lückenbreite besonders verletzungsträchtigen Abschnitten der Effekt eines frühen Abweisens eines von oben in Richtung der Messeranordnung bewegten Benutzerfingers noch verstärkt wird.

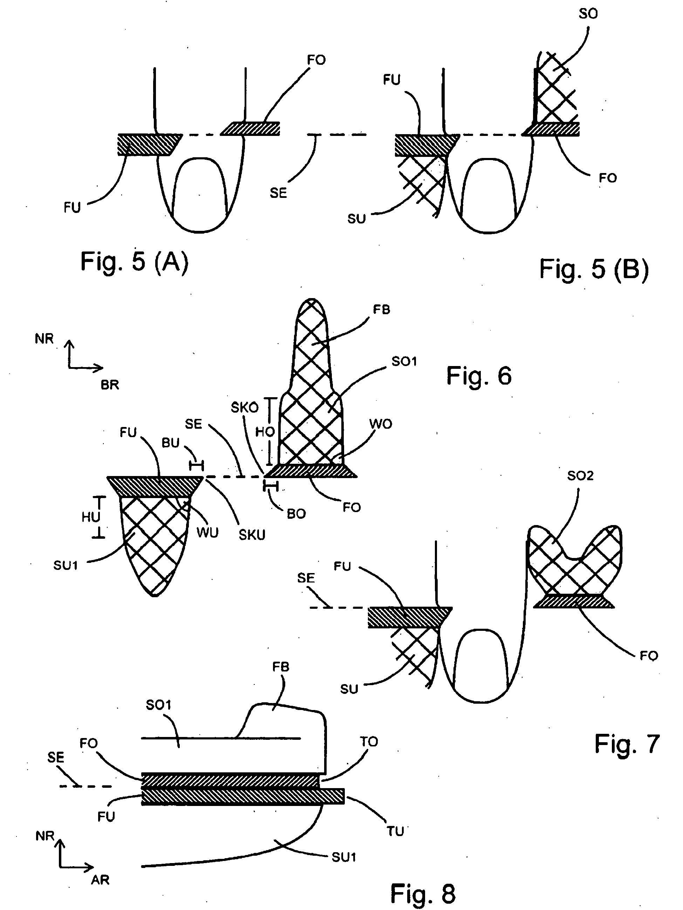

Fig. 5 (A) zeigt eine Verletzungssituation ohne die erfindungsgemäßen Schutzstrukturen. Ein in eine Lücke zwischen sich schließende Messer von oben eingebrachter Benutzerfinger wird durch Untermesser UM und Obermesser OM mit geringer Kraft tief eingeschnitten, da die schräg angeschliffenen Schneidkanten leicht in weiche Bereiche des Fingers eindringen. Demgegenüber ist in Fig. 5 (B) eine Verletzungssituation bei einer Gartenschere mit den erfindungsgemäßen Schutzstrukturen an Obermesser und Untermesser skizziert, wenn trotz des abweisenden Effekts der oberen Schutzstrukturen ein Finger in eine Lücke der Messeranordnung geraten ist. Die Flanken der unteren Schutzstruktur SU bzw. der oberen Schutzstruktur SO legen sich mit vergleichsweise großen Anlageflächen an den Finger an und bewirken dadurch eine hohe Widerstandskraft gegen das weitere Schließen der Messeranordnung, so dass die Schneidkanten von Obermesser und Untermesser in der Schneidebene SE nur um ein geringes Maß in den Finger einschneiden können und damit das Ausmaß der Verletzung erheblich reduziert wird. Der typischerweise aus einer Batterie gespeiste elektrische Antriebsmotor gebräuchlicher Gartenscheren ist von der Motorleistung in der Regel so schwach, dass das Gerät dann schnell zum Stillstand kommt.

In Fig. 6 sind vorteilhafte Querschnitte von Schutzfinger einer unteren Schutzstruktur SU1 und einer der oberen Schutzstruktur SO1 als Schnittbild in einer quer zur Arbeitsrichtung verlaufenden, gegen die Spitzen der Schneidfinger der Messeranordnung entgegen der Arbeitsrichtung zurückgesetzten Schnittebene dargestellt. Sowohl der Schutzfinger der unteren Schutzstruktur SU1 als auch der Schutzfinger der oberen Schutzstruktur SO1 besitzen an ihren den der gemeinsamen Schneidebene SE abgewandten Seiten der Schneidfinger FU des Untermessers bzw. FO des Obermessers in Bewegungsrichtung BR eine Breite, welche im wesentlichen gleich der Breite der Gegenfläche an den jeweiligen Schneidfingern ist. Insbesondere ist die Breite der Schutzfinger der Schutzstrukturen an diesen Positionen geringer als die um die zweifache Flankenbreite BU bzw. BO der schräg angeschliffenen Schneidkanten der jeweiligen Messer größere Gesamtbreite der Schneidfinger.

Die von der Seite der Schneidfinger weg führenden Flanken der Schutzfinger SU1 bzw. SO1 weisen in Normalenrichtüng NR über eine Erstreckung HU bzw. HO, welche wenigstens das 2-fache, vorzugsweise wenigstens das 3-fache der Plattendicke von Untermesserplatte bzw. Obermesserplatte bei den Schneidfingern beträgt, vorteilhafterweise gegen die Schneidebene SE bzw. die zu dieser parallelen Flächen der Messerplatten Flankenwinkel WU bzw. WO auf. Die Flankenwinkel betragen vorteilhafterweise wenigstens 45°, insbesondere wenigstens 60°, vorzugsweise wenigstens 75°. Der genannte vorteilhafterweise erhöhte Abschnitt FB der Schutzfinger der oberen Schutzstruktur SO1 kann wie dargestellt in der Breite in Bewegungsrichtung BR verringert sein, da für die Verminderung der Schwere einer eventuellen Verletzung vor allem der den Schneidfingern FO nahe Bereich der oberen Schutzfinger SO1 von Bedeutung ist.

Fig. 7 zeigt eine alternative Form der Schneidfinger einer oberen Schutzstruktur SO2. In ihrem unteren, den Schneidfingern FO des Obermessers zuweisenden Enden sind die Schutzfinger unverändert nicht breiter als die Schneidfinger selbst, insbesondere gegen die Schneidkanten um die Breite der Schneidflanken zurückgesetzt. Die Schutzfinger der oberen Schutzstruktur SO2 sind danach aber gegen ihr unteres Ende mit ihrer in Projektion senkrecht zur Schneidebene SE äußeren Kontur breiter als die Schneidfinger FO des Obermessers, so dass ein in Richtung einer Schneidlücke bewegter Finger zum einen leicht bereits vor Erreichen einer Position zwischen sich in Bewegungsrichtung BR aufeinander zu bewegenden Schneidfingern von Obermesser und Untermesser abgewiesen wird oder bei einem bereits in eine sich schließende Lücke reichenden Finger die obere Schutzstruktur SO2 früher an dem Finger zur Anlage kommt und das bewegte Obermesser damit früher abgebremst wird.

Fig. 8 zeigt eine Seitenansicht eines vorderen Bereichs der Messeranordnung mit Schutzstrukturen bei Blickrichtung in Bewegungsrichtung BR. Die Spitze TU des Schneidfingers FU des Untermessers ragt in Arbeitsrichtung AR über die Spitze TO des Schneidfingers FÖ des Obermessers hinaus. Der Schutzfinger der oberen Schutzstruktur SO ragt über die Spitze TO des Schneidfingers der oberen Schutzstruktur SO in Arbeitsrichtung hinaus, aber weniger weit als die Spitze TU des Schneidfingers FU des Untermessers. Die untere Schutzstruktur SU liegt mit ihrer Spitze in Arbeitsrichtung AR etwa in gleicher Position wie die Spitze des Schutzfingers der oberen Schutzstruktur SO. Die obere Schutzstruktur weist in einem Frontbereich, welcher vorteilhafterweise wenigstens 10 mm beträgt, gegenüber ihrem von der Spitze weiter entgegen der Arbeitsrichtung AR entfernten Abschnitt einen in Richtung der Flächennormalen NR der Messerplatten bzw. der Schneidebene SE erhöhten Abschnitt FB auf.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Grasschere mit einer Messeranordnung, welche ein erstes und ein zweites Messer enthält, welche in einer Schneidebene aneinander anliegen und relativ zueinander in einer Bewegungsrichtung oszillierend bewegbar sind, wobei im Betrieb zumindest das Obermesser relativ zu einem Gehäuse (SG) der Grasschere bewegt ist und welche jeweils eine Fingerstruktur mit mehreren in eine Arbeitsrichtung ragenden Schneidfingern (FU, FO) und von diesen begrenzte, in Arbeitsrichtung offene Zwischenräume (LU) aufweisen, **dadurch gekennzeichnet, dass** zumindest im Bereich der in Arbeitsrichtung weisenden Spitzen der Schneidfinger (FO) des Obermessers entlang der der Schneidebene abgewandten Seite obere Schutzstrukturen (SO) angeordnet sind, welche senkrecht zur Schneidebene von den Schneidfingern (FO) des Obermessers abstehen und im Betrieb mit dem Obermesser mitbewegt sind.

2. Grasschere nach Anspruch 1, **dadurch gekennzeichnet, dass** an der der Schneidebene abgewandten Seite der Schneidfinger (FU) des Untermessers untere Schutzstrukturen (SU) angeordnet sind, welche senkrecht zur Schneidebene von den Schneidfingern (FU) des Untermessers abstehen.

3. Grasschere nach Anspruch 1 oder 2, **dadurch gekennzeichnet, dass** die untere und/oder die obere Schutzstruktur (SO, SU) um ein Schutzmaß, welches ein Mehrfaches der Dicke der jeweiligen Schneidfinger (FO, FU) beträgt, von den Schneidfingern (FO, FU) abstehen.

4. Grasschere nach Anspruch 3, **dadurch gekennzeichnet, dass** die oberen Schutzstrukturen (SO) des Obermessers in einem Frontbereich (FB) bei den Spitzen der Schneidfinger weiter von den Schneidfingern abstehen als in einem gegen die Spitzen der Schneidfinger entgegen der Arbeitsrichtung weiter zurück versetzten Bereich.

5. Grasschere nach einem der Ansprüche 1 bis 4, **dadurch gekennzeichnet, dass** das Untermesser bezüglich eines Scherengehäuses (SG) feststehend ist und dessen erste Fingerstruktur (FU) in Arbeitsrichtung über die zweite Fingerstruktur (FO) des relativ zum Gehäuse bewegten Obermessers hinausragt.

6. Grasschere nach einem der Ansprüche 1 bis 4, **dadurch gekennzeichnet, dass** in Projektion der Schutzstrukturen (SO, SU) senkrecht zur Schneidebene die Schutzstrukturen (SO, SU) in Bewegungsrichtung nicht hinter die Schneidkanten der jeweils zugeordneten Schneidfinger (FO, FU) senkrecht zu den Schneidkanten versetzt sind.

7. Grasschere nach einem der Ansprüche 1 bis 6, **dadurch gekennzeichnet, dass** in Projektion senkrecht zur Schneidebene die Schutzstrukturen (SO, SU) zumindest eines Messers wenigstens im Bereich der Spitzen der Fingerstruktur (FO, FU) vor den Schneidkanten liegend in Zwischenräume (LU) zwischen den Schneidfingern ragen.

8. Grasschere nach einem der Ansprüche 1 bis 7, **dadurch gekennzeichnet, dass** die Schutzstrukturen (SO, SU) an ihren den Messern zugewandten Enden nicht über die Schneidkanten der zugeordneten Schneidfinger (FO, FU) senkrecht zu den Schneidkanten hinausragen.

9. Grasschere nach einem der Ansprüche 1 bis 8, **dadurch gekennzeichnet, dass** die Schutzstrukturen (SO, SU) von den zugeordneten Messern senkrecht zur Schneidebene weg führend Seitenflanken aufweisen, welche höchstens 45°, insbesondere höchstens 30°, vorzugsweise höchstens gegen die Flächennormale der Schneidebene geneigt sind.

10. Grasschere nach einem der Ansprüche 1 bis 9, **dadurch gekennzeichnet, dass** die Schutzstrukturen (SO, SU) an Obermesser und Untermesser unterschiedlich ausgebildet sind.

11. Grasschere nach einem der Ansprüche 1 bis 10, **dadurch gekennzeichnet, dass** die Schutzstrukturen (SO, SU) zu mehreren, vorzugsweise allen Schneidfingern (FO, FU) eines Messers in einem gemeinsamen Schutzkörper verbunden sind.

12. Grasschere nach Anspruch 10, **dadurch gekennzeichnet, dass** die Verbindung der Schutzstrukturen (SO, SU) zu mehreren Schneidfingern (FO, FU) eines Messers in einem entgegen der Arbeitsrichtung hinter den Schneidkanten die Schneidfinger (FO, FU) liegenden Teil des Schutzkörpers liegt.

13. Grasschere nach einem der Ansprüche 1 bis 12, **dadurch gekennzeichnet, dass** die dem Untermesser zugeordneten Schutzstrukturen (SO, SU) baulich mit Bodenabstandsstufen vereint sind.

14. Grasschere nach einem der Ansprüche 1 bis 13, **dadurch gekennzeichnet, dass** die Schutzstrukturen (SO, SU) wenigstens eines der Messer über Befestigungsmittel (HS, BC) lösbar an dem Messer gehalten ist.

15. Grasschere nach Anspruch 14, **dadurch gekennzeichnet, dass** in dem Untermesser Aussparungen (HN) vorgesehen sind, in welche Befestigungsmittel (HS) der Schutzstrukturen (SO, SU) des Obermessers eingreifen.

## Claims

1. Grass shears with a blade arrangement which includes a first and a second blade, which lie together in one cutting plane and are movable in an oscillating manner in one direction of movement relative to each other, wherein during operation, at least the upper blade is moved relative to a housing (SG) of the grass shears and which in each case has a finger structure with a plurality of cutting fingers (FU, FO) projecting in a working direction and bounded by these, open spaces (LU) in a working direction, **characterised in that** at least in the region of the tips of the cutting fingers (FO) of the upper blade pointing in the working direction along the side facing away from the cutting plane upper protective structures (SO) are arranged, which protrude perpendicular to the cutting plane from the cutting fingers (FO) of the upper blade and during operation are moved with the upper blade.

2. Grass shears according to claim 1, **characterised in that** on the side of the cutting finger (FU) of the lower blade facing away from the cutting plane lower protective structures (SU) are arranged, which protrude perpendicular to the cutting plane from the cutting fingers (FU) of the lower blade.

3. Grass shears according to claim 1 or 2, **characterised in that** the lower and/or the upper protective structure (SO, SU) protrudes from the cutting fingers (FO, FU) about a protective measure which is a multiple of the thickness of the respective cutting finger (FO, FU).

4. Grass shears according to claim 3, **characterised in that** the upper protective structures (SO) of the upper blade in a front region (FB) at the tips of the cutting finger protrude further from the cutting fingers than in an area offset further against the tips of the cutting finger counter to the working direction.

5. Grass shears according to any one of claims 1 to 4, **characterised in that** the lower blade is fixed with respect to a shear housing (SG), and that its first finger structure (FU) protrudes in the working direction beyond the second finger structure (FO) of the upper blade moved relative to the housing.

6. Grass shears according to any one of claims 1 to 4, **characterised in that** in the projection of the protective structures (SO, SU) perpendicular to the cutting plane the protective structures (SO, SU) are not offset in the direction of movement behind the cutting edges of the cutting finger (FO, FU) arranged in each case perpendicular to the cutting edges.

7. Grass shears according to any one of claims 1 to 6, **characterised in that** in the projection perpendicular to the cutting plane the protective structures (SO, SU) protrude at least one blade at least in the region of the tips of the finger structure (FO, FU) in front of the cutting edges lying in the spaces (LU) between the cutting fingers.

8. Grass shears according to any one of claims 1 to 7, **characterised in that** the protective structures (SO, SU) at their ends facing the blades do not protrude beyond the cutting edges of the arranged cutting finger (FO, FU) perpendicular to the cutting edges.

9. Grass shears according to any one of claims 1 to 8, **characterised in that** the protective structures (SO, SU) have side flanks leading away from the arranged blades perpendicular to the cutting plane, which are inclined at most 45°, in particular at most 30°, preferably at most against the normal surface of the cutting plane.

10. Grass shears according to any one of claims 1 to 9, **characterised in that** the protective structures (SO, SU) are formed differently on the upper blade and lower blade.

11. Grass shears according to any one of claims 1 to 10, **characterised in that** the protective structures (SO, SU) are connected to a plurality of, preferably all, cutting fingers (FO, FU) of one blade in a common protective body.

12. Grass shears according to claim 10, **characterised in that** the connection of the protective structures (SO, SU) to a plurality of cutting fingers (FO, FU) of one blade lies in a part of the protective body lying behind the cutting edges of the cutting fingers (FO, FU) counter to the working direction.

13. Grass shears according to any one of claims 1 to 12, **characterised in that** the protective structures (SO, SU) arranged with the lower blade are structurally combined with clearance increments.

14. Grass shears according to any one of claims 1 to 13, **characterised in that** the protective structures (SO, SU) of at least one of the blades are releasably held on the blade by a fastening means (HS, BC).

15. Grass shears according to claim 14, **characterised in that** recesses (HN) are provided in the lower blade, in which fastening means (HS) of the protective structures (SO, SU) of the upper blade engage.

## Revendications

1. Cisaille à gazon équipée d'un ensemble de lames comprenant une première et une deuxième lames, s'appuyant l'une contre l'autre sur un plan de coupe et pouvant osciller l'une par rapport à l'autre selon un sens de déplacement, au moins la lame supérieure se déplaçant alors par rapport à un boîtier (SG) de la cisaille à gazon en cours de fonctionnement, et ces lames présentant respectivement une structure de doigts constituée de plusieurs doigts de dispositif de coupe faisant saillie dans le sens du travail (FU, FO) et des espaces intermédiaires délimités par ces doigts et ouverts dans le sens du travail (LU), **caractérisée en ce que** des structures de protection supérieures (SO) sont placées, au moins dans la zone des pointes des doigts de dispositif de coupe (FO) de la lame supérieure se déplaçant dans le sens du travail, le long du côté adjacent du plan de coupe, ces structures de protection supérieures étant espacées des doigts de dispositif de coupe (FO) de la lame supérieure perpendiculairement au plan de coupe et se déplaçant avec la lame supérieure en cours de fonctionnement.

2. Cisaille à gazon selon la revendication 1, **caractérisée en ce que** des structures de protection inférieures (SU) sont placées sur le côté adjacent du plan de coupe des doigts de dispositif de coupe (FU) de la lame inférieure, ces structures de protection inférieures étant espacées des doigts de dispositif de coupe (FU) de la lame inférieure perpendiculairement au plan de coupe.

3. Cisaille à gazon selon la revendication 1 ou 2, **caractérisée en ce que** la structure de protection inférieure et/ou supérieure (SO, SU) est/sont espacée(s) des doigts de dispositif de coupe (FO, FU) autour d'une masse protectrice représentant plusieurs fois l'épaisseur des doigts de dispositif de coupe respectifs (FO, FU).

4. Cisaille à gazon selon la revendication 3, **caractérisée en ce que** les structures de protection supérieures (SO) de la lame supérieure sont, dans une zone frontale (FB) au niveau des pointes des doigts de dispositif de coupe, encore plus espacées des doigts de dispositif de coupe que dans une zone encore décalée opposée aux pointes des doigts de dispositif de coupe dans le sens inverse au sens du travail.

5. Cisaille à gazon selon l'une quelconque des revendications 1 à 4, **caractérisée en ce que** la lame inférieure est fixe par rapport à un boîtier de cisaillement (SG) et la première structure de doigts (FU) orientée dans le sens du travail passe au-dessus de la deuxième structure de doigts (FO) de la lame supérieure en mouvement par rapport au boîtier.

6. Cisaille à gazon selon l'une quelconque des revendications 1 à 4, **caractérisée en ce que**, lors d'une projection des structures de protection (SO, SU) perpendiculaire au plan de coupe, les structures de protection (SO, SU) sont décalées perpendiculairement aux arrêtes de coupe, dans un sens de déplacement autre que derrière les arrêtes de coupe des doigts de dispositif de coupe respectivement affectés (FO, FU).

7. Cisaille à gazon selon l'une quelconque des revendications 1 à 6, **caractérisée en ce que**, lors d'une projection perpendiculaire au plan de coupe, les structures de protection (SO, SU) d'au moins une lame s'insèrent dans les espaces intermédiaires (LU) entre les doigts de dispositif de coupe, au moins dans la zone des pointes de la structure de doigt (FO, FU) située en amont des arrêtes de coupe.

8. Cisaille à gazon selon l'une quelconque des revendications 1 à 7, **caractérisée en ce que** les structures de protection (SO, SU), en leurs extrémités adjacentes à la lame, ne passent pas par-dessus les arrêtes de coupe des doigts de dispositif de coupe affectés (FO, FU) perpendiculairement aux arrêtes de coupe.

9. Cisaille à gazon selon l'une quelconque des revendications 1 à 8, **caractérisée en ce que** les structures de protection (SO, SU) des lames affectées présentent, perpendiculairement au plan de coupe, des arrêtes de coupe fuyantes, inclinées au maximum de 45°, en particulier au maximum de 30°, de préférence par rapport à la surface plane normale du plan de coupe.

10. Cisaille à gazon selon l'une quelconque des revendications 1 à 9, **caractérisée en ce que** les structures de protection (SO, SU) de la lame supérieure et de la lame inférieure sont différemment conçues.

11. Cisaille à gazon selon l'une quelconque des revendications 1 à 10, **caractérisée en ce que** les structures de protection (SO, SU) sont reliées à plusieurs doigts de dispositif de coupe (FO, FU), de préférence à tous, d'une lame dans un corps de protection commun.

12. Cisaille à gazon selon la revendication 10, **caractérisée en ce que** l'association des structures de protection (SO, SU) avec plusieurs doigts de dispositif de coupe (FO, FU) d'une lame s'effectue dans une partie du corps de protection opposée au sens du travail, derrière les arrêtes de coupe des doigts de dispositif de coupe (FO, FU) .

13. Cisaille à gazon selon l'une quelconque des revendications 1 à 12, **caractérisée en ce que** les structures de protection (SO, SU) affectées à la lame inférieure sont associées aux distances au sol lors de la construction.

14. Cisaille à gazon selon l'une quelconque des revendications 1 à 13, **caractérisée en ce que** les structures de protection (SO, SU) d'au moins une des lames sont fixées de manière amovible à la lame via un outil de fixation (HS, BC).

15. Cisaille à gazon selon la revendication 14, **caractérisée en ce qu'**il existe des encoches (HN) dans la lame inférieure, dans lesquelles les outils de fixation (HS) des structures de protection (SO, SU) de la lame supérieure s'enclenchent.
